# EUROPÄISCHE PATENTSCHRIFT

(11) **EP 4 281 733 B1**
(45) Veröffentlichungstag und Bekanntmachung des Hinweises auf die Patenterteilung: **18.09.2024**
(21) Anmeldenummer: 21810543.5
(22) Anmeldetag: 09.11.2021
(51) Int. Cl.: G01D 5/20, G01D 5/245

(54) **LÄNGLICHER KÖRPER MIT CURSORBAND FÜR EIN FAHRZEUGSYSTEM EINES FAHRZEUGS**
ELONGATE BODY COMPRISING A CURSOR BAND FOR A VEHICLE SYSTEM OF A VEHICLE
CORPS ALLONGÉ COMPRENANT UNE BANDE DE CURSEUR POUR SYSTÈME DE VÉHICULE D'UN VÉHICULE

(30) Priorität: 21.01.2021 DE 102021101209; 13.07.2021 DE 102021118077
(43) Veröffentlichungstag der Anmeldung: 29.11.2023
(73) Patentinhaber: HELLA GmbH & Co. KGaA, 59552 Lippstadt (DE)
(72) Erfinder: IRLE, Henning, 59557 Lippstadt (DE); FORST, Sebastian, 59174 Kamen (DE)
(74) Vertreter: Behr-Wenning, Gregor
(86) Internationale Anmeldenummer: PCT/EP2021/081025
(87) Internationale Veröffentlichungsnummer: WO 2022/156930

(56) Entgegenhaltungen:
- EP-A1- 3 012 636
- EP-A1- 3 179 214
- EP-A1- 3 479 072
- EP-A2- 0 289 033
- EP-B1- 3 479 072
- DE-A1- 102019 207 070
- DE-A1- 102019 209 494
- JP-A- H10 213 408

## Beschreibung

Die vorliegende Erfindung betrifft einen länglichen Körper mit einem Cursorband für ein Fahrzeugsystem eines Fahrzeugs, eine Fahrzeugsystemanordnung, ein Lenksystem eines Fahrzeugs sowie ein Fahrzeug.

EP 3 179 214 A1 beschreibt eine induktive Positionsmesseinrichtung.

Eine Ausführungsvariante eines induktiven Linearwegsensors ist aus der DE 10 2018 102 698 A1 bekannt. Der Linearwegsensor ist mit einem gegenüber einem Stator beweglichen Teil und darauf angeordneten, eine dreidimensionale Form aufweisenden Cursor ausgebildet. Das bewegliche Teil und der Cursor sind um eine gemeinsame Drehachse drehbeweglich angeordnet. Der Linearwegsensor ist damit als ein induktiver Drehwinkelsensor zur Erfassung eines Drehwinkels des beweglichen Teils gegenüber dem Stator ausgebildet.

Es hat sich gezeigt, dass der beschriebene induktive Drehwinkelsensor für bestimmte Anwendungen im Fahrzeug mit kleinen Bewegungen, wie etwa bei einer variablen Nockenwellenverstellung, besonders vorteilhaft ist.

Für einige Anwendungen, wie etwa ein Lenksystem eines Fahrzeugs, sind induktive Drehwinkelsensoren aufgrund der sich bei Interpretation seiner Messergebnisse ergebenden Mehrdeutigkeit von möglichen Mehrfachumdrehungen, die sich bei Lenksystemen aus den Mehrfachumdrehungen der Lenkradbewegung ergibt, die auch als Multiturn-Problematik bekannt ist, nicht geeignet. Denn die Erfassung aufgrund der Mehrfachumdrehungen der Lenkradbewegung ist sensorisch kompliziert, weil die Mehrfachumdrehungen (häufig auch als Multiturn bezeichnet) gezählt oder untersetzt werden müssen.

Bei künftigen Steer-by-wire-Lenksystemen kann die Problematik der Mehrdeutigkeit zunehmen, weil bei diesen die Lenksäule wegfällt und der Radwinkel der Lenkung als Positionsregelungsaufgabe zu verstehen ist. Anders als bei der heutigen Servolenkung in Fahrzeugen, bei der vor allem das Drehmoment geregelt wird, also eine Unterstützungsleistung der durch den Fahrer am Lenkrad aufgebrachten Kraft. Für die Positionsregelung in Steer-by-wire-Lenksystemen sind eine Soll-Position und eine Ist-Positionserfassung von hoher Präzision notwendig.

Bei einigen automotiven Anwendungen wie dem Lenksystem sind außerdem vergleichsweise lange Wege von ca. 20 bis 30 cm zu messen. Das macht induktive Positionssensoren, insbesondere in der Ausführung als induktive Drehwinkelsensoren und neben der Problematik der Mehrdeutigkeit, sehr groß und vergleichsweise teuer. Der vorliegenden Erfindung liegt die Aufgabe zugrunde, eine vereinfachte Möglichkeit für eine präzise Messung einer Position in einem Fahrzeugsystem anzugeben, die vergleichsweise lange Wege in kompakter und günstiger Bauweise messen kann und nicht das Problem der Mehrdeutigkeit aufweist.

Die voranstehende Aufgabe wird durch die Gegenstände der Patentansprüche gelöst. Insbesondere wird die Aufgabe durch einen länglichen Körper nach Anspruch 1 gelöst. Ferner wird die Aufgabe durch eine Fahrzeugsystemanordnung nach Anspruch 11, ein Lenksystem nach Anspruch 12 und ein Fahrzeug nach Anspruch 13 gelöst.

Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen länglichen Körper beschrieben sind, selbstverständlich auch im Zusammenhang mit der erfindungsgemäßen Fahrzeugsystemanordnung, dem erfindungsgemäßen Lenksystem und dem erfindungsgemäßen Fahrzeug und jeweils umgekehrt, sodass bezüglich der Offenbarung zu den einzelnen Erfindungsaspekten stets wechselseitig Bezug genommen wird beziehungsweise genommen werden kann.

Gemäß einem ersten Aspekt der Erfindung wird die Aufgabe gelöst durch einen länglichen Körper oder, mit anderen Worten, einen sich läng erstreckenden Körper oder Längskörper für ein Fahrzeugsystem eines Fahrzeugs. Der Körper weist zumindest ein Cursorband für einen induktiven Linearwegsensor auf. Das zumindest eine Cursorband erstreckt sich in Richtung einer Längserstreckung des Körpers. Das zumindest eine Cursorband ist mit mehreren elektrisch leitfähigen Cursorpads zur induktiven Kopplung zumindest einer Erregerspule mit zumindest einer Sensorspule eines Stators des Linearwegsensors sowie gegenüber den Cursorpads elektrisch weniger oder nicht leitfähigen Nichtkopplungsabschnitten ausgebildet. Die Cursorpads sind in Richtung der Längserstreckung jeweils durch die Nichtkopplungsabschnitte voneinander beabstandet. Die Cursorpads des Cursorbandes sind mit dem Körper verbunden.

Durch die erfindungsgemäße Anordnung des Cursorbandes an dem länglichen Körper des Fahrzeugsystems wird eine kompakte und einfache Messbarkeit der Linearposition des länglichen Körpers innerhalb des Fahrzeugsystems erzielt. Vorteile des sich daraus ergebenden induktiven Linearwegsensors (im Folgenden auch nur als Linearwegsensor bezeichnet) liegen insbesondere darin, dass durch die Ausbildung des Cursors als ein Cursorband an dem länglichen Körper eine induktive Sensierung der Linearposition des zumindest einen Cursorbands gegenüber dem Stator auf einfache Art und Weise ermöglicht wird. Dazu kann der Linearwegsensor, insbesondere der Stator, eine Auswerteschaltung aufweisen, die dazu eingerichtet ist, in Abhängigkeit von der induktiven Kopplung zwischen der zumindest einen Erregerspule und der zumindest einen Sensorspule eine Linearposition des zumindest einen Cursorbands relativ gegenüber dem Stator zu erfassen. In Anwendung bei einer Lenkaktuatorstange bzw. wenn der längliche Körper als eine Lenkaktuatorstange ausgebildet wird, was eine beispielhafte Ausführungsform des länglichen Körpers darstellt, entfällt mit dem Linearwegsensor die eingangs skizzierte Problematik der Mehrdeutigkeit und der Linearwegsensor kann vergleichsweise kompakt ausfallen und dennoch vergleichsweise lange Linearwege im Bereich von bis zu 30 oder 40 cm ohne Schwierigkeiten messen.

Die Cursorpads können sich in der Erstreckung des zumindest einen Cursorbandes linearzyklisch mit den Nichtkopplungsabschnitten abwechseln. Die Cursorpads können aus einem metallischen Material ausgebildet sein. Insbesondere können die Cursorpads aus einem elektrisch leitenden Vollmaterial ausgebildet sein. Hierdurch ist das zumindest eine Cursorband und damit der Linearwegsensor sehr robust ausgebildet und damit auch für besonders widrige Umgebungsbedingungen geeignet. Auch kann das elektrisch leitende Material der Cursorpads vorzugsweise als ein nicht ferromagnetisches Material, wie beispielsweise Kupfer, Aluminium, Edelstahl oder dergleichen, ausgebildet sein. Hierdurch sind die Cursorpads besonders für den Einsatz unter korrosiven Umgebungsbedingungen geeignet.

Die Nichtkopplungsabschnitte können hingegen aus einem nicht-metallischen Material, insbesondere aus einem elektrisch isolierenden Material bzw. Isolator, gebildet sein. Beispielsweise können die Nichtkopplungsabschnitte aus einem Kunststoff ausgebildet sein. Damit kann sichergestellt werden, dass die Nichtkopplungsabschnitte die Messergebnisse des Linearwegsensors nicht verfälschen. In einer später näher erläuterten vorzugsweisen Ausgestaltung kann der Nichtkopplungsabschnitt durch einen Freiraum bzw. Luftraum zwischen den Cursorpads gebildet werden.

Grundsätzlich ist es ausreichend, wenn der längliche Körper mit nur einem Cursorband ausgebildet ist. Das Cursorband bildet eine Spur mit induktiven Kopplungsabschnitten in Form der Cursorpads und den Nichtkopplungsabschnitten, der die zumindest eine Sensorspule des Stators zugeordnet ist.

Es kann aber auch vorgesehen sein, dass der Körper zumindest zwei Cursorbänder aufweist. Die Cursorpads der beiden Cursorbänder können in Richtung der Längserstreckung der Cursorbänder zueinander versetzt angeordnet sein. Es ist beispielsweise zudem möglich, dass die Cursorpads parallel zueinander angeordnet sind. Entsprechend kann auch der Stator des Linearwegsensors zumindest zwei Sensorspulen aufweisen oder aber der Linearwegsensor kann zwei Statoren mit jeweils zumindest einer Sensorspule aufweisen. Die Cursorbänder können demnach jeweils relativ gegenüber je einer Sensorspule oder je einem Stator beweglich und parallel zueinander angeordnet sein. Jedem der Cursorbänder kann damit jeweils eine Sensorspule des Stators oder ein Stator zugeordnet sein. Insbesondere kann eine jeweils einem Cursorband zugeordnete Sensorspule dem jeweiligen Cursorband gegenüberliegen. So kann jeweils eine induktive Kopplung der Erregerspule mit voneinander verschiedenen Sensorspulen erzielt werden, die jeweils unterschiedlichen Cursorbändern zugeordnet sind. Ferner ist es möglich, mehr als zwei Sensorspulen und mehr als zwei Cursorbänder zu verwenden. Dadurch kann die induktive Linearpositionserfassung durch den Linearwegsensor weiter verbessert werden.

Außerdem kann vorgesehen sein, dass die zumindest zwei Cursorbänder auf einander gegenüberliegenden oder aneinander angrenzenden Seiten des Körpers angeordnet sind. Dies führt zu einer kompakten Ausgestaltung des Körpers mit den Cursorbändern. In diesem Falle können auch die den jeweiligen Cursorbändern zugeordneten Sensorspulen einander gegenüberliegen oder nebeneinander angeordnet sein. Auch können die beiden Cursorbänder sich V-förmig gegenüberstehen, einen gemeinsamen Mittelsteg besitzen und als Stanzbiegeteil ausgeführt sein.

Es kann außerdem vorgesehen sein, dass die zumindest zwei Cursorbänder jeweils eine unterschiedliche Anzahl an Cursorpads aufweisen. Zudem kann die Auswerteschaltung des Linearwegsensors zur Auswertung des zurückgelegten Linearwegs auf Basis der zumindest zwei Cursorbänder und zumindest zwei Sensorspulen nach Art des Nonius-Prinzips eingerichtet sein. Hierdurch ist eine induktive Erfassung der Linearposition des länglichen Körpers, auf dem die Cursorbänder ausgebildet sind, relativ zu dem Stator jederzeit und mit hoher Präzision ermöglicht. Diese Fähigkeit wird auch als "True Power On" bezeichnet, wonach eine Positionserfassung auch direkt nach dem Einschalten des Linearwegsensors, also nach dessen Überführung in dessen Betriebszustand, möglich ist. Entsprechend ist auch eine Indexierung oder dergleichen bei dem Linearwegsensor gemäß der vorliegenden Ausführungsform nicht erforderlich.

Nach der Art des Nonius-Prinzips ausgestaltet kann auch von zwei unterschiedlichen Messwegen bzw. Spuren gesprochen werden, die durch die zumindest zwei Cursorbänder bereitgestellt werden. Die Cursorbänder können prinzipiell nebeneinander oder übereinander bzw. parallel zueinander angeordnet werden. Grundsätzlich können die Cursorpads eine Länge im Bereich von beispielsweise 1 bis 10 cm, insbesondere im Bereich von beispielsweise 1 bis 5 cm, aufweisen. Nach Art des Nonius-Prinzips kann mittels der Auswerteschaltung aber eine relative Verschiebung bzw. Bewegung des aus den Cursorbändern gebildeten Cursors bzw. daran befestigten beweglichen Teils auch eine wesentlich größere Länge von 30 cm oder mehr einfach und präzise gemessen werden.

Das Nonius-Prinzip funktioniert grundsätzlich derart, dass der Cursor über bzw. parallel zu zunächst einer der beiden Noniusspuren bzw. Sensorspulen des zumindest einen Stators bewegt wird. Dabei entsteht ein linearer Anstieg des Sensorausgangssignals bei der relativen Verschiebung von Cursorband gegenüber dem zumindest einen Stator entlang der Bewegungsrichtung. Vorliegend wird der Cursor durch die Cursorbänder gebildet. Das bedeutet, dass sofern ein Cursorpad des Cursorbands aus dem Erfassungsfeld des zumindest einen Stators herausläuft, das nächste Cursorpad auch schon hereinläuft. Im Detail kann das Prinzip in der Regel durch den Einsatz von nicht nur zwei Cursorpads, sondern drei oder mehr Cursorpads im Cursorband verbessert werden, da dann immer ein Cursorpad gerade reinläuft, ein Cursorpad voll erfasst wird bzw. voll im Erfassungsfeld ist und ein drittes Cursorpad gerade herausläuft. Als Ausgangssignal entsteht so ein Dreiecksignal.

Nun kommt die zweite Nonius-Spur bzw. die zweite Sensorspule mit dem zweiten Cursorband ins Spiel, die ein phasenverschobenes Dreiecksignal unterschiedlicher Länge erzeugt. Beide Nonius-Spuren bzw. Cursorbänder mit den ihn zugeordneten Sensorspulen können mittels eines Nonius-Algorithmus in der Auswertevorrichtung verrechnet werden. So wird ein Linearwegsensor bereitgestellt, der aufgrund der unterschiedlichen Längen der Cursorbänder und der verorteten Phasenbeziehung auf dem gewünschten Messweg von zehn cm oder mehr eindeutig ist. So gelingt mit der Bereitstellung von zwei parallelen Cursorbändern und zwei Sensorspulen, die jeweils eine Nonius-Spur bilden, ein hinsichtlich der Kosten attraktiver und äußerst kompakter Linearwegsensor. Dagegen weisen bekannte Linearwegsensoren häufig die Problematik auf, dass der Quotient aus Bauraumlänge und Messweg bei solchen sehr groß ist, was unvorteilhaft ist.

Erfindungsgemäß sind die Cursorpads als Erhebungen des Körpers oder auf Erhebungen des Körpers ausgebildet, die sich gegenüber den Nichtkopplungsabschnitten erheben. Dies ist eine konstruktiv einfache Art und Weise, dass die Sensorspulen nahe an die Cursorpads herangeführt werden können, um präzise erfasst zu werden. Die Nichtkopplungsabschnitte hingegen können eine größere Distanz zu der zumindest einen Sensorspule aufweisen, als die Cursorpads. Dadurch kann verhindert werden, dass die Nichtkopplungsabschnitte induktiv mit der zumindest einen Sensorspule gekoppelt werden.

Erfindungsgemäß weist ein Querschnitt der Erhebungen eine Pilzform auf. Die Pilzform kann im Wesentlichen auch als T-Form aufgefasst werden. Erfindungsgemäß erstreckt sich ein Stiel oder eine Säule der Pilzform oder T-Form von dem Körper weg. An der gegenüberliegenden Seite, von der sich der Stiel bzw. die Säule erstreckt, kann ein Hut der Pilzform bzw. eine im Wesentlichen senkrecht dazu verlaufende Plattform der T-Form angeordnet sein. Der Hut oder die Plattform kann dann das Cursorpad bilden oder das Cursorpad kann darauf ausgebildet sein. Es hat sich in Versuchen gezeigt, dass eine derartige Pilzform bzw. T-Form eine besonders präzise Messung der Linearposition ermöglicht, weil der Stiel bzw. die Säule das Cursorpad weitestgehend von dem Körper entkoppelt, der dann auch aus einem elektrisch leitfähigen Material gebildet sein kann bzw. kann dann der gesamte Körper einstückig ausgebildet sein, wie später näher erläutert wird.

Außerdem kann vorgesehen sein, dass die Erhebungen an einer von dem Körper wegweisenden Oberseite abgeflacht sind. Die Oberseite kann sich bei einer Erhebung in Pilzform bzw. T-Form am Hut bzw. an der Plattform befinden. Bezüglich der abgeflachten oder, mit anderen Worten, planaren Oberseite hat sich gezeigt, dass dies ebenso zur Verbesserung der Erfassungsgenauigkeit der Sensorsignale beiträgt. Außerdem kann vorgesehen sein, dass die Nichtkopplungsabschnitte durch Nuten zwischen den Cursorpads ausgebildet sind. Die Nuten können bis in den Körper hinein verlaufen. Der Körper kann grundsätzlich einen runden oder rechteckigen Querschnitt haben, der durch die Nuten abgeflacht sein kann. Durch die Nuten wird ein Luftraum bzw. Freiraum zwischen den Cursorpads geschaffen, der zusammen mit dem Abstand möglicher Erhebungen gegenüber den Nuten für die geringere elektrische Leitfähigkeit der Nichtkopplungsabschnitte sorgt bzw. zumindest dafür, dass die Nichtkopplungsabschnitte nicht durch den oder die Statoren induktiv gekoppelt werden. Mit anderen Worten ist es durch die Nuten auf besonders einfache Art und Weise möglich, die Nichtkopplungsabschnitte bereitzustellen, um eine induktive Kopplung dieser Abschnitte mit der zumindest einen Sensorspule zu vermeiden. Durch die Nuten befindet sich zwischen den Cursorpads lediglich Luft bzw. ein Luftraum, welcher die Cursorpads voneinander separiert und unerwünschte Messbeeinflussungen verhindert. Die Nuten können beispielsweise aus dem Körper herausgefräst werden oder der Körper kann als Ganzes mit den Nuten gegossen werden, wenn der Körper aus einem Metall ausgebildet wird oder aus einem Kunststoff hergestellt wird.

Weiterhin kann vorgesehen sein, dass die Cursorpads des Cursorbandes stoffschlüssig mit dem Körper verbunden sind. Möglich ist beispielsweise das Verschweißen, Anspritzen und/oder Verkleben der Cursorpads an dem Cursorband. Vorteilhafterweise wird eine möglichst zerstörungsfreie Befestigungsweise gewählt, um die Anwendung nicht zu beeinträchtigen, die gleichzeitig aber dazu geeignet ist, eine sichere Befestigung zu gewährleisten, damit die Befestigung bzw. feste Position von dem zumindest einen Cursorband an dem Körper nicht verloren geht, was ansonsten zu Messfehlern führen könnte. Alternativ können die Cursorpads beispielsweise mechanisch durch Verschrauben, Klemmen oder dergleichen an dem Körper gesichert werden.

Insbesondere kann vorgesehen sein, dass der Körper und das zumindest eine Cursorband einstückig ausgebildet sind. Mit anderen Worten kann das zumindest eine Cursorband bzw. können die Cursorpads monolithisch mit dem Körper ausgebildet sein. Der gesamte Körper mit den Cursorpads kann beispielsweise aus einem metallischen Material ausgebildet sein. Insbesondere kann der Körper mit den einstückig daran ausgebildeten Cursorpads aus einem elektrisch leitenden Vollmaterial ausgebildet sein. Hierdurch ist das zumindest eine Cursorband absolut verrutschsicher an dem Körper angeordnet und damit der Linearwegsensor sehr robust ausgebildet. Auch kann das elektrisch leitende Material des Körpers als ein nicht ferromagnetisches Material, wie beispielsweise Kupfer, Aluminium, Edelstahl oder dergleichen, ausgebildet sein. Hierdurch ist der Körper besonders für den Einsatz unter korrosiven Umgebungsbedingungen geeignet.

Vorgesehen sein kann alternativ, dass der Körper aus einem Trägermaterial ausgebildet ist, auf das die Cursorpads in Form leitfähiger Plättchen und/oder leitfähiger Beschichtungen aufgetragen sind. Der Träger kann beispielsweise aus einem Kunststoffmaterial hergestellt, insbesondere spritzgegossen sein. Der Träger, der alternativ auch als Kern bezeichnet werden kann, ermöglicht unter anderem eine besonders einfache spätere Befestigung des zumindest einen Cursorbandes an dem Körper. Die Cursorpads können beispielsweise als vereinzelte elektrisch leitende Plättchen, insbesondere Metallplättchen, oder elektrisch leitende Beschichtungen, insbesondere Metallbeschichtungen, auf dem Träger aufgebracht sein, etwa durch Kleben oder durch einen anderweitigen Prozess, wie Eintauchen in ein flüssiges Metallbad. Die Cursorpads können auch in einem Sinterverfahren hergestellt werden. Dies birgt den Vorteil, dass die auftretenden, durch den Prozess verursachten Fertigungstoleranzen weiter eingeschränkt werden und somit optimal für die Sensorik ausgelegt werden können. Dementsprechend braucht der Körper nicht vollständig aus einem elektrisch leitenden Material ausgebildet sein. Es ist ausreichend, wenn lediglich die auf dem Kern bzw. dem Träger angeordnete Beschichtung bzw. die darauf angeordneten Plättchen elektrisch leitend ausgebildet sind, was die Fertigungskosten einer entsprechenden Lenkanordnung des Körpers mit dem Linearwegsensor reduziert. Gleichwohl ist ein derartiger Körper weniger stabil.

Möglich ist beispielsweise, dass der Körper als eine Lenkaktuatorstange, als eine Kolbenstange oder eine Schiene ausgebildet ist. In der Ausführungsform des Körpers als Lenkaktuatorstange ist das zugehörige Fahrzeugsystem ein Lenksystem der Lenkaktuatorstange. In der Ausführungsform des Körpers als Kolbenstange kann das zugehörige Fahrzeugsystem beispielsweise ein Stoßdämpfer des Fahrzeugs sein. In der Ausführungsform des Körpers als eine Schiene kann die Schiene beispielsweise eine Sitzschiene für einen Fahrzeugsitz sein, welcher das Fahrzeugsystem darstellt. Diese Ausführungsbeispiele des Körpers und des Fahrzeugsystems sind lediglich beispielhaft gewählt. Es sind weitaus mehr Ausführungsbeispiele des Körpers in verschiedenen Fahrzeugsystemen eines Fahrzeugs möglich, in denen ein Linearweg bzw. eine Linearverschiebung gemessen werden muss oder soll und die Erfindung die zuvor beschriebenen Vorteile erzielt.

Gemäß einem zweiten Aspekt der Erfindung wird die eingangs erwähnte Aufgabe gelöst durch eine Fahrzeugsystemanordnung mit dem länglichen Körper nach dem ersten Aspekt der Erfindung und dem induktiven Linearwegsensor. Der Linearwegsensor weist den Stator mit der zumindest einen Erregerspule und der zumindest einen Sensorspule sowie eine Auswerteschaltung auf. Die Auswerteschaltung ist dazu eingerichtet, in Abhängigkeit von der induktiven Kopplung zwischen der zumindest einen Erregerspule und der zumindest einen Sensorspule eine Linearposition des Körpers anhand des zumindest einen Cursorbandes relativ gegenüber dem Stator zu erfassen.

Insbesondere kann vorgesehen sein, dass der induktive Linearwegsensor (im Folgenden auch nur als Linearwegsensor bezeichnet) mittels der Auswerteschaltung dazu eingerichtet ist, bei einer Bewegung des zumindest einen Cursorbands in der linearen Bewegungsrichtung einen von dem zumindest einen Cursorband relativ gegenüber dem Stator zurückgelegten Linearweg zu erfassen.

Die Funktionsweise der induktiven Messung zwischen einem Stator und einem Cursor ist dem Fachmann in grundsätzlicher Art und Weise beispielsweise aus der DE 10 2018 102 698 A1 bekannt, auf die hierin vollständig Bezug genommen bzw. verwiesen wird, sowie aus den von der Firma HELLA GmbH & Co. KGaA vertriebenen Sensoren mit dem Markennamen CIPOS^{®} bekannt.

Der Stator kann insbesondere als eine Leiterplatte mit der darauf angeordneten zumindest einen Erregerspule und zumindest einen Sensorspule ausgebildet sein. Der Stator bzw. die Leiterplatte kann auch die Auswerteschaltung aufweisen. Möglich ist beim Einsatz eines Körpers mit zumindest zwei Cursorbändern auch der Einsatz von zumindest zwei Statoren des Linearwegsensors, wobei je ein Stator mit je zumindest einer Sensorspule je einem Cursorband zugeordnet sein kann.

Bei dem induktiven Linearwegsensor kann es sich um einen Inkrementalgeber wie auch um einen Sensor handeln, der eine absolute Erfassung der Linearposition des zumindest einen Cursorbandes relativ zu dem Stator ermöglicht. Mittels eines Inkrementalgebers ist lediglich eine digitale Erfassung der Linearposition des zumindest einen Cursorbandes relativ zu dem Stator möglich, die zudem von der Historie der zuvor gezählten Inkremente abhängig ist und somit nach einem Neustart oder nach dem Einschalten des Linearwegsensors oder übergeordneten Systems keine unmittelbare absolute Positionsinformation zu liefern vermag. Mittels der Auswerteschaltung des Linearwegsensors kann auf dem Fachmann bekannte Weise nicht nur die Linearposition des zumindest einen relativ zu dem Stator, sondern auch ein von dem zumindest einen Cursorband zurückgelegter Linearweg und/oder eine Relativgeschwindigkeit zwischen dem zumindest einen Cursorband und dem Stator ermittelt werden. Ferner kann die Auswerteschaltung Mittel zur Signalverstärkung und Signalaufbereitung umfassen.

Bei einer Lenkanordnung als beispielhafte Fahrzeugsystemanordnung wird eine Lenkaktuatorstange bzw. Zahnstange eingesetzt, an der das zumindest eine Cursorband angeordnet ist. Der oder die Statoren können hingegen an einem unbeweglichen bzw. nicht beweglichen Teil positioniert werden, gegenüber dem die Lenkaktuatorstange linear bewegt bzw. verschoben wird. Dadurch führt eine Linearbewegung des zumindest einen Cursorbandes unmittelbar zu einer identischen Positionsverschiebung der Linearposition von dem zumindest einen Cursorband und der Lenkaktuatorstange gegenüber dem nicht bewegten Teil bzw. Stator. Aus der durch den Stator bzw. die Auswerteschaltung erfassten Linearposition bzw.

Linearbewegung des zumindest einen Cursorbandes kann damit direkt bzw. unmittelbar auf die Linearposition bzw. Linearbewegung der Lenkaktuatorstange geschlossen werden, welches hinsichtlich seiner Linearverschiebung ohne ein mögliches Verrutschen des zumindest einen Cursorbandes von der Lenkaktuatorstange erfasst werden kann. Bei einem Lenksystem mit der Lenkanordnung entspricht die Linearverschiebung der Lenkaktuatorstange damit einer veränderten Linearposition des darauf angeordneten zumindest einen Cursorbandes, sodass mittels des Linearwegsensors die Linearverschiebung erfasst werden kann, um darauf basierend eine entsprechende Lenkbewegung auszuführen.

Gemäß einem dritten Aspekt der Erfindung wird die eingangs erwähnte Aufgabe gelöst durch ein Lenksystem für ein Fahrzeug, wobei das Lenksystem die als Lenkanordnung ausgebildete Fahrzeugsystemanordnung nach dem zweiten Aspekt der Erfindung aufweist.

Das Lenksystem des Fahrzeugs kann bekannte Komponenten wie Lenkelement, beispielsweise Lenkrad, eine Fahrzeugachse usw. aufweisen.

Es kann vorgesehen sein, dass das Lenksystem als ein Steer-by-wire-System mit einem Steuergerät und einem elektromechanischen Aktor ausgebildet ist. Das Steuergerät kann mit dem Linearwegsensor gekoppelt sein. Das Steuergerät kann dazu eingerichtet sein, die vom Linearwegsensor erfasste Linearposition in einen Lenkbefehl für den elektromechanischen Aktor umzusetzen und an den elektromechanischen Aktor zu übertragen, sodass der elektromechanische Aktor eine dem Lenkbefehl entsprechende Lenkbewegung ausführen kann.

Der elektromechanische Aktor kann beispielsweise ein Elektromotor oder jede andere Art von Aktor sein, die die Lenkbewegung am Fahrzeug ausführen kann.

Der Linearwegsensor kann zumindest teilweise in oder an einem Gehäuse einer Leistungseinheit des Lenksystems angeordnet sein, welche zumindest den elektromechanischen Aktor aufweist. Derartige Leistungseinheiten werden häufig auch als Power-Pack bezeichnet und umfassen auch das Steuergerät des Steer-by-wire-Systems.

Gemäß einem dritten Aspekt der Erfindung wird die eingangs erwähnte Aufgabe durch ein Fahrzeug, insbesondere ein Kraftfahrzeug, wie beispielsweise einen PKW oder LKW, mit einer Fahrzeugsystemanordnung nach dem ersten Aspekt der Erfindung oder einem Lenksystem nach dem dritten Aspekt der Erfindung gelöst.

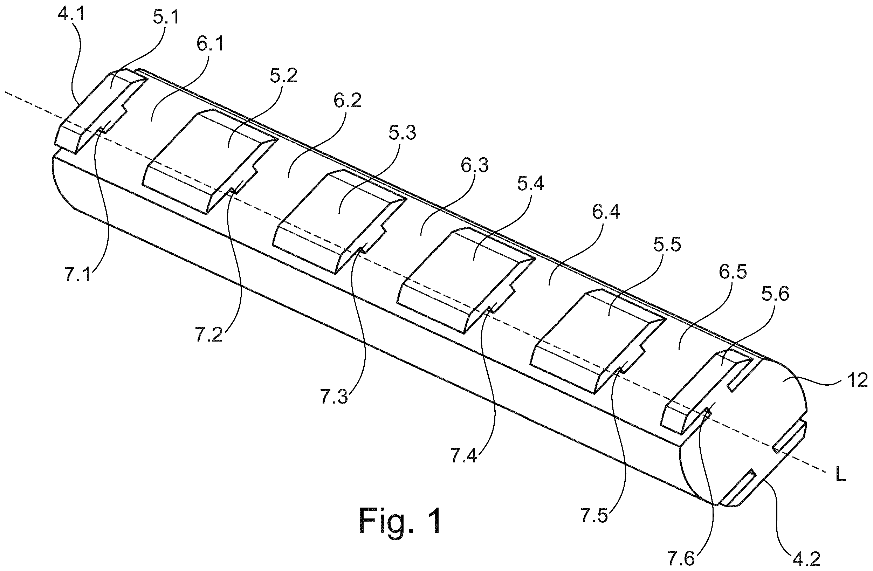

Anhand der beigefügten Zeichnungen wird die Erfindung nachfolgend näher erläutert. Sämtliche aus den Ansprüchen, der Beschreibung oder den Figuren hervorgehenden Merkmale, einschließlich konstruktiver Einzelheiten und räumlicher Anordnungen, können sowohl für sich als auch in den beliebigen verschiedenen Kombinationen erfindungswesentlich sein. Elemente mit gleicher Funktion und/oder Wirkungsweise sind in den Figuren 1 bis 7 jeweils mit denselben Bezugszeichen versehen. Es zeigen jeweils schematisch:
- Fig. 1: eine perspektivische Ansicht einer Lenkaktuatorstange;
- Fig. 2: einen Querschnitt der Lenkaktuatorstange aus Fig. 1;
- Fig. 3: einen alternativen Querschnitt der Lenkaktuatorstange aus Fig. 1;
- Fig. 4: einen Querschnitt einer Lenkanordnung mit der Lenkaktuatorstange aus Fig. 1;
- Fig. 5: eine Ansicht eines Signal-Linearweg-Diagramms der Sensorspulen im induktiven Linearwegsensor der Fig. 4;
- Fig. 6: eine Prinzipansicht eines Lenksystems eines Fahrzeugs; und
- Fig. 7: eine Prinzipansicht einer Lenkeinheit des Lenksystems aus Fig. 6.

Identische, funktionsgleiche oder baugleiche Elemente werden in den Figuren 1 bis 7 mit selben Bezugszeichen bezeichnet. Soweit ein identisches, funktionsgleiches oder baugleiches Element in derselben Figur mehrfach vorhanden ist, wird es mit demselben Bezugszeichen bezeichnet, wobei es lediglich zur Unterscheidung der Elemente untereinander fortlaufend nummeriert wird. Die Anzahl und Anordnung identischer, funktionsgleicher oder baugleicher Elemente im Sinne der Erfindung wird damit keineswegs beschränkt, sondern ist, soweit nichts anderes bestimmt ist, lediglich beispielhaft angegeben. Die fortlaufende Nummerierung ist durch einen Punkt vom Bezugszeichen getrennt.

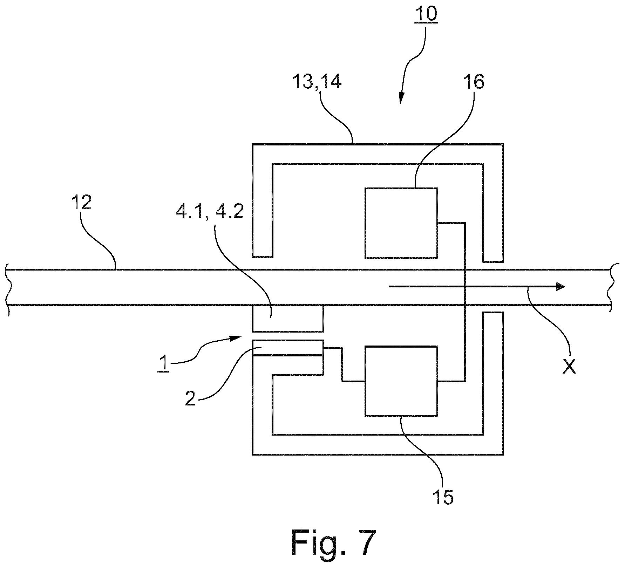

Figur 1 zeigt eine Lenkaktuatorstange 12 in einer perspektivischen Ansicht. Die Lenkaktuatorstange 12 ist hier lediglich in einem Ausschnitt bzw. mit einer Teillänge der wahren Länge der Lenkaktuatorstange 12 gezeigt, die deutlich länger sein kann, wie beispielsweise Fig. 7 prinzipiell entnommen werden kann. Die Lenkaktuatorstange 12 erstreckt sich entlang einer Längsachse L.

Die hier gezeigte und beschriebene Lenkaktuatorstange 12 ist damit lediglich eine beispielhafte Ausführungsform eines erfindungsgemäßen länglichen Körpers 12. Alternativ kann der längliche Körper 12 beispielsweise als eine Kolbenstange eines Stoßdämpfers oder eine Sitzschiene eines Fahrzeugsitzes im Fahrzeug ausgebildet sein. Insoweit gilt das im Rahmen der Fig. 1 bis 7 in Bezug auf die Ausführungsform des länglichen Körpers 12 Gezeigte und Beschriebene analog für die generische Ausführungsform als länglicher Körper 12 in einem Fahrzeugsystem eines Fahrzeugs sowie für spezifische Ausführungsformen gültig ist.

An einem Teil, insbesondere an oder nahe einem Ende, der Lenkaktuatorstange 12 ist ein Cursor ausgebildet, der vorliegend durch zwei Cursorbänder 4.1, 4.2 gebildet wird. Dabei ist aus der gezeigten Perspektive nur das Cursorband 4.1 vollständig sichtbar, während das dem Cursorband 4.1 gegenüberliegende Cursorband 4.2 durch die Lenkaktuatorstange 12 bzw. dessen Stangenkörper verdeckt ist. Die beiden Cursorbänder 4.1, 4.2 sind aber grundsätzlich mit denselben Elementen aufgebaut.

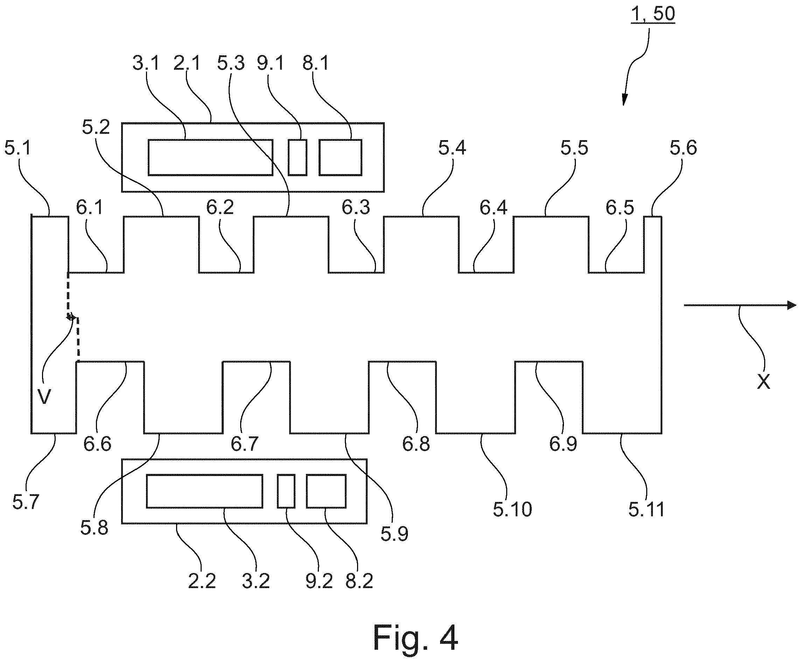

Das Cursorband 4.1 weist linearzyklisch voneinander beabstandete Cursorpads 5.1, 5.2, 5.3, 5.4, 5.5, 5.6 auf, wobei jeweils zwischen zwei Cursorpads 5 einer der mehreren Nichtkopplungsabschnitte 6.1, 6.2, 6.3, 6.4, 6.5 angeordnet ist. Die Cursorpads 5 dienen als induktive Kopplungsbereiche für die Statoren 2.1, 2.2 mit ihren Sensorspulensätzen 3.1, 3.2, wie in Fig. 4 zu sehen ist und mit Bezug auf Fig. 4 später näher erläutert wird. Hierbei umfassen die Spulensätze je selber ein bis n Einzelempfangsspulen. Für die verbreitete CIPOS^{®} Technologie, sind dies je drei Einzelempfangsspulen pro Empfangsspulensatz.

Die Lenkaktuatorstange 12 mit den Cursorpads 5 ist vorliegend einstückig aus einem elektrisch leitfähigen Werkstoff, insbesondere aus einem metallischen Werkstoff ausgebildet. Hierzu kann die Lenkaktuatorstange 12 mit dem Bereich der Cursorpads 5 und den Nichtkopplungsabschnitten 6 beispielsweise aus einer gegossenen oder tiefgezogenen zylindrischen Stange gefräst werden.

Grundsätzlich kann die Anzahl an Cursorpads 5 und Nichtkopplungsabschnitten 6 entsprechend der jeweiligen Anforderung, insbesondere dem dabei zu messenden Linearweg, frei gewählt werden. So kann beispielsweise die Anzahl an Cursorpads 5 zwischen 3 und 30, insbesondere zwischen 5 und 20, liegen. Ebenso kann die Anzahl an Nichtkopplungsabschnitten 6 zwischen 2 und 29, insbesondere zwischen 4 und 19, liegen.

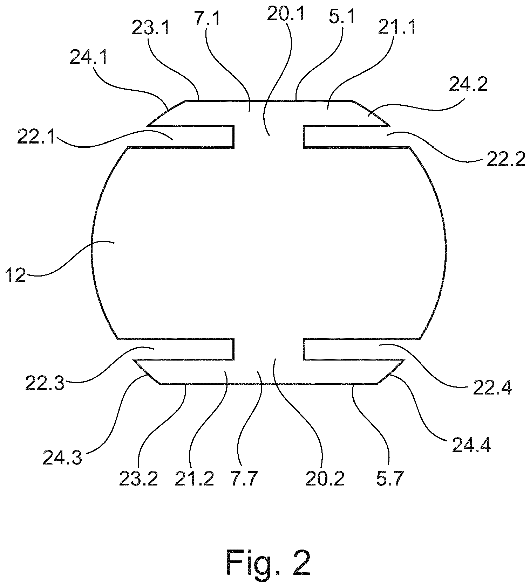

Die Nichtkopplungsabschnitte 6 können durch ein weniger als die Cursorpads 5 oder nicht elektrisch leitfähiges Material gebildet sein. Insbesondere können sie durch einen Isolator zwischen den Cursorpads 5 gebildet werden. Vorliegend sind die Nichtkopplungsabschnitte 6 allerdings vereinfacht durch Nuten in den Cursorbändern 4.1, 4.2 zwischen je zwei Cursorpads 5 eines jeden Cursorbandes 4.1, 4.2 ausgebildet, die Freiräume zwischen den Cursorpads 5 ausbilden. Dies ist eine besonders bevorzugte Ausführungsvariante der Nichtkopplungsabschnitte 6, weil der Cursor dadurch einfach und kostengünstig gefertigt werden kann und gute Messergebnisse erzielt werden können. Insbesondere muss dadurch, dass die Cursorpads 5 die Nuten bzw. Nutflächen der Nuten in Form von Erhebungen 7 (siehe Fig. 2), insbesondere im Querschnitt pilzförmigen Erhebungen 7, überragen, kein zusätzlicher Isolator verwendet werden.

Figur 2 zeigt im Querschnitt der Lenkaktuatorstange 12 die Erhebungen 7.1, 7.2, die die einander gegenüberliegenden Cursorpads 5.1, 5.2 ausbilden. Die einander gegenüberliegenden Cursorpads 5.1, 5.2 weisen eine Pilzform oder T-Form auf, bei der jeweils ein Stengel bzw. eine Säule 20.1, 20.2 sich jeweils von der Lenkaktuatorstange 12 weg erstreckt. An der Säule 20.1, 20.2 befindet sich jeweils eine Plattform 21.1, 21.2 bzw. ein plattförmiges Element, welches sich über die darunter befindliche Fläche der Lenkaktuatorstange 12 erstreckt, insbesondere parallel dazu erstreckt. Die Plattformen 21.1, 21.2 sind an ihren Oberseiten 23.1, 23.2 vorzugsweise aber nicht notwendigerweise abgeflacht bzw. mit einer flachen Oberfläche versehen. Quer zur Erstreckung der Lenkaktuatorstange 12 befindliche und einander in dieser Querrichtung gegenüberliegende Außenkanten 24.1, 24.2 sind abgeschrägt. Die Säulen 20.1, 20.2 sind durch Schlitze 22.1, 22.2, 22.3, 22.4 zwischen der Lenkaktuatorstange 12 bzw. ihrem stangenförmigen Körper und den Plattformen 21.1, 21.2 ausgebildet. Mit anderen Worten befindet sich durch die Schlitze 22.1, 22.2, 22.3, 22.4 jeweils ein Freiraum zwischen den Plattformen 21.1, 21.2 und dem Körper der Lenkaktuatorstange 12.

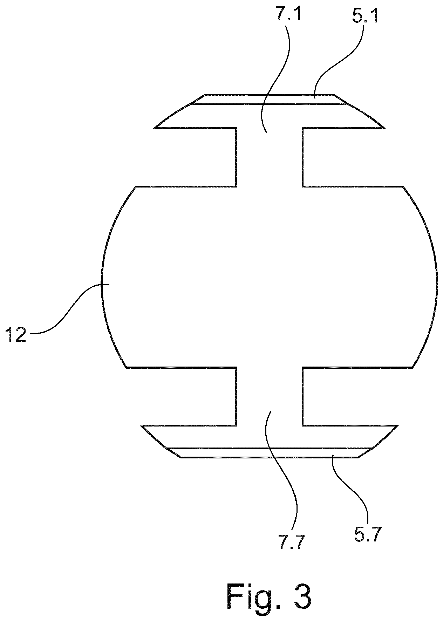

Figur 3 zeigt eine alternative Ausführungsform zur Ausbildung der gesamten Lenkaktuatorstange 12 in einer einstückigen Ausführung aus einem metallischen Material. Die Lenkaktuatorstange 12 und die Erhebungen 7.1, 7.2 sind vorliegend aus einem Träger oder Kern aus beispielsweise Kunststoff hergestellt. Dabei kann der Träger oder Kern kostengünstig in einem Spritzgussverfahren hergestellt werden. Die Cursorpads 5.1, 5.2 sind dann, wie hier gezeigt, durch Kleben oder anderweitiges Anordnen auf den Erhebungen 7.1, 7.2 aufgebracht.

Figur 4 zeigt eine Lenkanordnung 50 als beispielhafte Ausführungsform einer Fahrzeugsystemanordnung 50, bei der durch die Lenkaktuatorstange 12 aus Fig. 1 bzw. die darauf befindlichen Cursorbänder 4.1, 4.2 und die Statoren 2.1, 2.2 ein induktiver Linearwegsensor 1 ausgebildet wird. Alternativ kann auch ein gemeinsamer Stator 2 verwendet werden.

Der Linearwegsensor 1 ist zur Ermittlung der Linearposition und/oder des in eine Bewegungsrichtung X zurückgelegten Linearwegs des Cursors mit den Cursorbändern 4.1, 4.2 relativ zu den Statoren 2.1, 2.2 ausgebildet. Die Statoren 2.1, 2.2 weisen jeweils eine Erregerspule 9.1, 9.2 und einen Sensorspulensatz 3.1, 3.2 auf, die auf dem Fachmann bekannte Weise auf oder in dem jeweiligen Stator 2.1, 2.2 angeordnet sind, die vorliegend durch Leiterplatten gebildet werden. Die zwei Sensorspulensätze 3.1, 3.2 sind dabei jeweils einem der Cursorbänder 4.1, 4.2 zugeordnet bzw. parallel dazu angeordnet.

Die jeweils quer zur Längserstreckung der Cursorbänder 4.1, 4.2 zueinander benachbarten Cursorpads 5 sind vorliegend mit einem Versatz V zueinander angeordnet. Dies ist beispielhaft anhand der Cursorpads 5.1, 5.7 gezeigt, zwischen denen der Versatz V gekennzeichnet ist. Mit anderen Worten setzen die Cursorpads 5 der jeweiligen Cursorbänder 4.1, 4.2 jeweils an unterschiedlichen in der Erstreckung betrachteten Längen bzw. Positionen der Lenkaktuatorstange 12 an. Außerdem weist das Cursorband 4.2 weniger Cursorpads 5 als das Cursorband 4.1 auf, vorliegend beispielsweise fünf Cursorpads 5 beim Cursorband 4.2 und sechs Cursorpads 5 beim Cursorband 4.1.

Vorliegend weisen die Cursorpads 5 und die Nichtkopplungsabschnitte 6 eine rechteckige Form auf. Dies ist fertigungstechnisch zwar einfach realisierbar, jedoch für die Funktion in den Cursorbändern 4.1, 4.2 nicht notwendig. So ist es alternativ beispielsweise möglich, die Cursorpads 5 und/oder die Nichtkopplungsabschnitte 6 mit einer rechteckigen Form mit abgerundeten Ecken, einer elliptischen Form oder anderweitigen Form auszubilden.

In einem Abstand von den Cursorbändern 4.1, 4.2 und parallel dazu befinden sich die Statoren 2.1, 2.2. Außerdem weisen die Statoren 2.1, 2.2 eine gemeinsame Auswerteschaltung 8 oder jeweils einzelne Auswerteschaltungen 8.1, 8.2 auf, die jedoch miteinander verschaltet bzw. zusammenarbeiten können. Die Auswerteschaltung 8 ist zur Ermittlung der relativen Position des Cursors der Lenkaktuatorstange 12 bzw. eines zurückgelegten Linearwegs relativ zu den Statoren 2.1, 2.2 in Abhängigkeit der induktiven Kopplung zwischen den Erregerspulen 9.1, 9.2 und den zwei Sensorspulensätzen 3.1, 3.2 der Statoren 2.1, 2.2 mittels des Cursors in einem Betriebszustand des induktiven Linearwegsensors 1 gemäß dem vorliegenden Ausführungsbeispiel eingerichtet, also wenn der induktive Linearwegsensor 1 eingeschaltet ist. Aus der so ermittelten Linearposition der Lenkaktuatorstange 12 relativ zu den Statoren 2.1, 2.2 kann dann auf dem Fachmann bekannte Weise mittels der Auswerteschaltung 8 die Linearposition, der Linearweg und/oder die Lineargeschwindigkeit der Lenkaktuatorstange 12 relativ zu den Statoren 2.1, 2.2 ermittelt werden.

In Abhängigkeit der Linearlage bzw. Linearposition der Lenkaktuatorstange 12 relativ zu den Statoren 2.1, 2.2 gelangen ein oder mehrere Cursorpads 5 der Cursorbänder 4.1, 4.2 in Wirkverbindung mit den jeweiligen Erregerspulen 9.1, 9.2 und den Sensorspulensätzen 3.1, 3.2. Die zwischen den Cursorpads 5 liegenden Nichtkopplungsabschnitte 6 sind im Wesentlichen nicht in Wirkverbindung mit den Erregerspulen 9.1, 9.2 und den Sensorspulensätzen 3.1, 3.2. Die Cursorpads 5 stellen damit jeweils eine induktive Kopplung der Erregerspulen 9.1, 9.2 mit den Sensorspulensätzen 3.1, 3.2 her, die zu einer eindeutigen Kombination von Ausgangssignalen der Sensorspulensätzen 3.1, 3.2 sorgt, wie Fig. 4 entnommen werden kann.

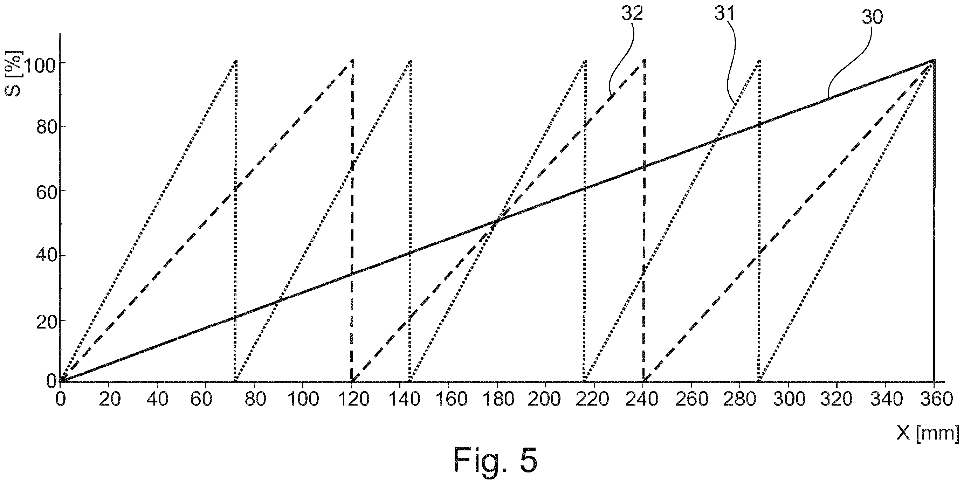

Figur 5 stellt die Signalstärke S in % der als Dreieckssignale erzeugten Ausgangssignale 31, 32 der Sensorspulensätze 3.1, 3.2 über den zurückgelegten Linearweg X in der Bewegungsrichtung X dar. Diese Ausgangssignale 31, 32 werden zur Auswertung an die Auswerteschaltung 8 weitergeleitet. Von der Auswerteschaltung 8 werden die Ausgangssignale 31, 32 der Sensorspulen 3.1, 3.2 zu einem resultierenden Signal 30 zusammengesetzt, welches den zurückgelegten Linearweg X ergibt.

Die Cursorbänder 4.1, 4.2 bilden unterschiedliche Nonius-Spuren mit einer voneinander verschiedenen Anzahl von Cursorpads 5 mit dazu korrespondierenden Nichtkopplungsabschnitten 6, wobei die Cursorpads 5 und Nichtkopplungsabschnitte 6 der zwei Cursorbänder 4.1, 4.2 derart ausgebildet und zueinander angeordnet sind, dass eine Auswertung der relativen Position des beweglichen Teils zu den Statoren 2.1, 2.2 mittels der Auswerteschaltung 8 nach Art des Nonius-Prinzips ermöglicht ist.

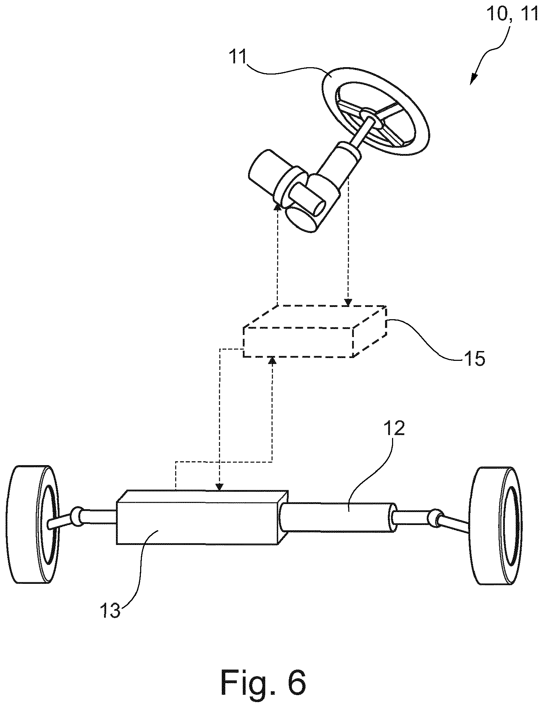

Nun kann in dem Fahrzeugsystem 10, vorliegend beispielhaft in Form des Lenksystems 10, im Fahrzeug 100, wie es in den Fig. 6 und 7 gezeigt ist, der Stator 2 oder können die Statoren 2.1, 2.2 an einem unbeweglichen bzw. nicht beweglichen Teil befestigt werden. Wird die Lenkaktuatorstange 12 bewegt, bewegt sich damit auch der Cursor, und zwar vorbei an den Statoren 2.1, 2.2. Die Erregerspulen 9.1, 9.2 sorgen in einer für den Fachmann bekannten Weise für eine Erregung bzw. Wirbelstromerzeugung in den Cursorpads 5, die wiederum jeweils von den Sensorspulensätzen 3.1, 3.2 erfasst werden. Dadurch kann die Auswerteschaltung 8 nach dem Nonius-Prinzip mit den Cursorbändern 4.1, 4.2 aufweisend die zueinander versetzten und in der Anzahl unterschiedlichen Cursorpads 5 einen Linearweg der Bewegung des Cursors in der Bewegungsrichtung X bzw. eine Linearposition, also eine Position in der linearen Bewegungsrichtung X, des Cursors gegenüber der übereinstimmenden Linearposition der Statoren 2.1, 2.2 messen. Daraus kann auf die Linearposition bzw. den Linearweg der Lenkaktuatorstange 12 bzw. Zahnstange geschlossen werden.

Figur 6 zeigt ein Lenksystem 10 eines Fahrzeugs in Form eines Automobils, welches in Form eines Steer-by-wire-Systems ausgebildet ist.

In sogenannten Steer-by-Wire Systemen, bei denen die Lenksäule entfällt, ist das System durch erstens eine Mensch-Maschine-Schnittstelle und zweitens eine Positionierungsvorrichtung an den Rädern des Fahrzeugs vorgegeben. Die erstgenannte Einheit befindet sich im Fahrzeuginnenraum und besteht vorzugsweise aus einem Lenkrad mit Lenkwinkelsensorik und einer Rückstellvorrichtung. Die zweitgenannte Positionierungsvorrichtung ist verbunden mit den vorzugsweise beiden vorderen Rädern und wird durch einen Positionsregelkreis mit einem Sollwert und einem Istwert gebildet. Wie in einem Positionsregelkreis üblich, erfolgt die Regelung in digitaler Form mittels eines Positionsregelalgorithmus in einem Mikroprozessor oder einer anderen digitalen Regelung oder einem festverdrahteten Algorithmus in einer sogenannten State-Machine. Prinzipiell sind für die Regelaufgabe jedoch auch analoge Regelungen oder analog/digital-hybride Regelungen denkbar.

Um die Regelung präzise durchführen zu können, kommt dem Positionssensor eine hohe Bedeutung zu. Als Positionssensoren kommen prinzipiell Winkelsensoren oder Linearwegsensoren in Betracht. Die hier gewählte Ausführungsform stellt den Linearwegsensor 1 aus Fig. 1 an der Lenkaktuatorstange 12 des Lenksystems 10 bereit (siehe Fig. 7).

Das Lenksystem 10 umfasst eine Lenkelement 11, welches vorliegend als ein Lenkrad ausgebildet ist. Der Fahrer des Fahrzeugs 100 möchte das Fahrzeug mittels des Lenkelements 11 lenken und dreht dazu das Lenkrad in eine bestimmte Richtung um einen bestimmten Lenkwinkel. Diesen Lenkwinkel und das Lenkmoment nimmt eine am Lenkrad verbaute Sensorik auf. Um genau zu sein ist ein Steuergerät 15 (im Englischen auch als Electronic Control Unit, kurz ECU bezeichnet) des Lenksystems 10 elektronisch mit der entsprechenden Sensorik verbunden und empfängt den Lenkwunsch des Fahrers (Lenkwinkel und Lenkmoment) und leitet diesen an eine wiederum mit dem Steuergerät 15 verbundene Leistungseinheit 13 weiter, die häufig auch als Power-Pack bezeichnet wird.

Die Lenkung basiert dabei auf einem Positionsregelkreis mit einem Sollwert und einem Istwert. Mittels des induktiven Linearwegsensors 1 in der Leistungseinheit 13 (siehe Fig. 7) kann die Ist-Position der Räder des Fahrzeugs festgestellt werden. Der Lenkaktuator 16 (siehe Fig. 7), ebenfalls in der Leistungseinheit 13, wird dann von der Steuereinheit 15 angesteuert, um die Lenkung entsprechend dem Fahrerwunsch zu betätigen. Dies geschieht indem die Lenkaktuatorstange 12 linear nach rechts oder links bewegt wird und damit auch die Räder des Fahrzeugs 100 entsprechend bewegt. Dies geschieht so lange, bis der Linearwegsensor 1 das Erreichen der Soll-Position, die das Steuergerät 15 gemäß der Lenkradbetätigung des Fahrers vorgegeben hat, dem Steuergerät 15 mitteilt.

Figur 7 zeigt eine detailliertere Prinzipskizze des Lenksystems 10, welches auch die Komponenten der Leistungseinheit 13 zeigt. Der Linearwegsensor 1 befindet sich mit dem Stator 2 (der durch mehrere Statoren 2.1, 2.2 gebildet sein kann) an einem Gehäuse 14 der Leistungseinheit 13, wobei die Cursorbänder 4.1, 4.2 auf der Lenkaktuatorstange 12 befestigt sind und relativ gegenüber vom Stator 2 bewegbar angeordnet sind. Das Gehäuse 14 kann beispielsweise eine Aussparung oder Tasche enthalten, in die der Stator 2 bzw. die Statoren 2.1, 2.2 eingebettet sein können.

Durch die Integration des Linearwegsensors 1 in die Leistungseinheit 13 entfallen die ansonsten notwendigen und mit Kosten behafteten Verkabelungen, da die in der Leistungseinheit 13 bestehenden genutzt bzw. vorteilhafterweise erweitert werden können. Zudem sind die Schnittstellen und die Versorgungsleitungen der Elektronik auf den Statoren 2.1, 2.2 des Linearwegsensors 1 nicht gegen Kurzschlüsse der Versorgungsleitungen und Ausgangsleitungen des Linearwegsensors 1 zu schützen. Dieses erlaubt in der Regel eine vereinfachte Elektronik und für die verwendeten Halbleitertechnologien einen einfacheren und kostengünstigeren Herstellprozess. Durch eine kompaktere Bauart dieser Ausführung ist die Gesamtanordnung zudem unempfindlicher gegenüber elektromagnetischer Einstrahlung von Störfeldern, wodurch eine Erhöhung der Betriebsrobustheit der Sensorik erzielt wird.

Das Funktionsprinzip der Lenkeinheit 10 ist, wie oben beschrieben, derart, dass das Steuergerät 15 des Lenksystems 10 innerhalb der Leistungseinheit 13 den Lenkwunsch des Fahrers empfängt, wenn der Fahrer des Fahrzeugs 100 das Lenkelement 11 betätigt. Das Steuergerät 15 kann dann mittels der Linearposition bzw. des Linearwegs der Lenkaktuatorstange 12, die es aus den Messungen des Linearwegsensors 1 erhält oder errechnen kann, den elektromechanischen Aktor bzw. Lenkaktuator 16 zum Steuern der Lenkung des Fahrzeugs 100 entsprechend dem durch Betätigung des Lenkelements 11 seitens des Fahrers geäußerten Lenkwunsches betätigen.

Der Aktor 16 wir solange betätigt, bis die Soll-Position gemäß dem Lenkwunsch des Fahrers erreicht ist. Dies ist dann der Fall, wenn die Regeldifferenz E = Ist-Position - Soll-Position gleich Null ist. Die Ist-Position wiederum geht aus den Messungen des Linearwegsensors 1 hervor.

### Bezugszeichenliste

- 1: induktiver Linearwegsensor
- 2: Stator
- 3: Sensorspule, Sensorspulensatz
- 4: Cursorband
- 5: Cursorpad
- 6: Nichtkopplungsabschnitt
- 7: Erhebung
- 8: Auswerteschaltung
- 9: Erregerspule
- 10: Fahrzeugsystem, Lenksystem
- 11: Lenkelement
- 12: länglicher Körper, Lenkaktuatorstange
- 13: Leistungseinheit
- 14: Gehäuse
- 15: Steuergerät
- 16: elektromechanischer Aktor, Lenkaktuator
- 20: Säule
- 21: Plattform
- 22: Schlitz
- 23: Oberseite
- 24: Außenkante
- 30: resultierendes Signal
- 31: Signal der ersten Sensorspule
- 32: Signal der zweiten Sensorspule
- 50: Fahrzeugsystemanordnung, Lenkanordnung
- X: Bewegungsrichtung, Linearweg
- S: Signal
- V: Versatz
- L: Längsachse

## Patentansprüche

1. Länglicher Körper (12) für ein Fahrzeugsystem (10) eines Fahrzeugs (100), wobei der Körper (12) zumindest ein Cursorband (4) für einen induktiven Linearwegsensor (1) aufweist, wobei das zumindest eine Cursorband (4) sich in Richtung einer Längserstreckung des Körpers (12) erstreckt, wobei das zumindest eine Cursorband (4) mit mehreren elektrisch leitfähigen Cursorpads (5) zur induktiven Kopplung zumindest einer Erregerspule (9) mit zumindest einer Sensorspule (3) eines Stators (2) des Linearwegsensors (1) sowie gegenüber den Cursorpads (5) elektrisch weniger oder nicht leitfähigen Nichtkopplungsabschnitten (6) ausgebildet ist, wobei die Cursorpads (5) in Richtung der Längserstreckung jeweils durch die Nichtkopplungsabschnitte (6) voneinander beabstandet sind, und wobei die Cursorpads (5) des Cursorbandes (4) an dem Körper (12) ausgebildet sind, wobei die Cursorpads (5) als Erhebungen (7) des Körpers (12) oder auf Erhebungen (7) des Körpers (12) ausgebildet sind, die sich gegenüber den Nichtkopplungsabschnitten (6) erheben, und
wobei ein Querschnitt der Erhebungen (7) eine Pilzform aufweist, wobei die Pilzform im Wesentlichen eine T-Form darstellt,
wobei sich ein Stiel der Pilzform von dem Körper (12) weg erstreckt.

2. Körper (12) nach Anspruch 1, wobei der Körper (12) zumindest zwei Cursorbänder (4) aufweist, wobei die Cursorpads (5) der beiden Cursorbänder (4) in Richtung der Längserstreckung der Cursorbänder (4) zueinander versetzt angeordnet sind.

3. Körper (12) nach Anspruch 2, wobei die zumindest zwei Cursorbänder (4) auf einander gegenüberliegenden oder aneinander angrenzenden Seiten des Körpers (12) angeordnet sind.

4. Körper (12) nach Anspruch 2 oder 3, wobei die zumindest zwei Cursorbänder (4) jeweils eine unterschiedliche Anzahl an Cursorpads (5) aufweisen.

5. Körper (12) nach einem der voranstehenden Ansprüche, wobei die Erhebungen (7) an einer von dem Körper (12) weg weisenden Oberseite (23) abgeflacht sind.

6. Körper (12) nach einem der voranstehenden Ansprüche, wobei die Nichtkopplungsabschnitte (6) durch Nuten zwischen den Cursorpads (5) ausgebildet sind.

7. Körper (12) nach einem der voranstehenden Ansprüche, wobei die Cursorpads (5) des Cursorbandes (4) stoffschlüssig mit dem Körper (12) verbunden sind.

8. Körper (12) nach einem der voranstehenden Ansprüche, wobei der Körper (12) und das zumindest eine Cursorband (4) einstückig ausgebildet sind.

9. Körper (12) nach einem der Ansprüche 1 bis 7, wobei der Körper (12) aus einem Trägermaterial, insbesondere aus einem Kunststoff, ausgebildet ist, auf das die Cursorpads (5) in Form leitfähiger Plättchen und/oder leitfähiger Beschichtungen aufgetragen sind.

10. Körper (12) nach einem der voranstehenden Ansprüche, wobei der Körper (12) als eine Lenkaktuatorstange (12), als eine Kolbenstange oder eine Schiene ausgebildet ist.

11. Fahrzeugsystemanordnung (50) mit dem länglichen Körper (12) nach einem der voranstehenden Ansprüche und einem induktiven Linearwegsensor (1), wobei der Linearwegsensor (1) einen Stator (2) mit Z zumindest einer Erregerspule (9) und zumindest einer Sensorspule (3) sowie eine Auswerteschaltung (8) aufweist, wobei die Auswerteschaltung (8) dazu eingerichtet ist, in Abhängigkeit von der induktiven Kopplung zwischen der zumindest einen Erregerspule (9) und der zumindest einen Sensorspule (3) eine Linearposition des Körpers (12) anhand des zumindest einen Cursorbandes (4) relativ gegenüber dem Stator (2) zu erfassen.

12. Lenksystem (10) mit einer Fahrzeugsystemanordnung (50) nach Anspruch 11, wobei das Lenksystem (10) als ein Steer-by-wire-System mit einem Steuergerät (15) und einem elektromechanischen Aktor (16) ausgebildet ist, wobei das Steuergerät (15) mit dem Linearwegsensor (1) gekoppelt ist und dazu eingerichtet ist, die vom Linearwegsensor (1) erfasste Position des Körpers (12), welcher als Lenkaktuatorstange (12) ausgebildet ist, in einen Lenkbefehl für den elektromechanischen Aktor (16) umzusetzen und an den elektromechanischen Aktor (16) zu übertragen, sodass der elektromechanische Aktor (16) eine dem Lenkbefehl entsprechende Lenkbewegung ausführen kann.

13. Fahrzeug mit einer Fahrzeugsystemanordnung (50) nach Anspruch 11 oder mit einem Lenksystem (10) nach Anspruch 12.

## Claims

1. Elongate body (12) for a vehicle system (10) of a vehicle (100), wherein the body (12) features at least one cursor band (4) for an inductive linear path sensor (1), wherein the at least one cursor band (4) extends in the direction of a longitudinal extension of the body (12), wherein the at least one cursor band (4) is designed with several electrically conductive cursor pads (5) to inductively couple at least one excitation coil (9) with at least one sensor coil (3) of a stator (2) of the linear path sensor (1) and with non-coupling sections (6) that are less conductive or non-conductive in relation to the cursor pad (5), wherein the cursor pads (5) are each arranged at a distance to each other by the non-coupling sections (6) in the direction of the longitudinal extension, and wherein the cursor pads (5) of the cursor band (4) are formed at the body (12), wherein the cursor pads (5) are designed as elevations (7) of the body (12) or on elevations (7) of the body (12) which are raised in relation to the non-coupling sections (6) and wherein one cross-section of the elevations (7) features a mushroom shape, wherein the mushroom shape essentially represents a T-shape wherein one stem of the mushroom shape extends away from the body (12).

2. Body (12) in accordance with claim 1, wherein the body (12) features at least two cursor bands (4), wherein the cursor pads (5) of the two cursor bands (4) are arranged to be staggered to each other in the direction of the longitudinal extension of the cursor bands (4).

3. Body (12) in accordance with claim 2, wherein the at least two cursor bands (4) are arranged on opposite or adjacent sides of the body (12).

4. Body (12) in accordance with claim 2 or 3, wherein the at least two cursor bands (4) each feature a different number of cursor pads (5).

5. Body (12) according to one of the above claims, wherein the elevations (7) are flattened on an upper side (23) facing away from the body (12).

6. Body (12) in accordance with one of the above claims, wherein the non-coupling sections (6) are formed by grooves between the cursor pads (5).

7. Body (12) in accordance with one of the above claims, wherein the cursor pads (5) of the cursor band (4) are bonded to the body (12).

8. Body (12) in accordance with one of the above claims, wherein the body and the at least one cursor band (4) are formed as a single piece.

9. Body (12) in accordance with one of claims 1 through 7, wherein the body (12) is formed from a carrier material, in particular from a plastic onto which the cursor pads (5) are applied in the form of conductive plates and/or conductive coatings.

10. Body (12) in accordance with one of the above claims, wherein the body (12) is formed as a steering actuator rod (12), as a piston rod or a rail.

11. Vehicle system arrangement (50) with the elongate body (12) in accordance with one of the above claims and an inductive linear path sensor (1),
wherein the linear path sensor features a stator (2) with at least one excitation coil (9) and at least one sensor coil (3) as well as an evaluation circuit (8), wherein the evaluation circuit (8) is set up to detect a linear position of the body (12) in relation to the stator (2) on the basis of the at least one cursor band (4) depending on the inductive coupling between the at least one excitation coil (9) and the at least one sensor coil (3).

12. Steering system (10) with a vehicle system arrangement (50) in accordance with claim 11, wherein the steering system (10) is designed as a steer-by-wire system with a control unit (15) and an electromechanical actuator (16), wherein the control unit (15) is coupled to the linear path sensor (1) and is set up to implement the position of the body (12) identified by the linear path sensor (1), which is designed as a steering actuator rod (12), into a steering command for the electromechanical actuator (16) and to transmit it to the electromechanical actuator (16) such that the electromechanical actuator (16) can execute a steering movement corresponding to the steering command.

13. Vehicle with a vehicle system arrangement (50) in accordance with Claim 11 or with a steering system (10) in accordance with claim 12.

## Revendications

1. Corps allongé (12) pour système de véhicule (10) d'un véhicule (100), le corps (12) présentant au moins une bande de curseur (4) pour un capteur de déplacement linéaire inductif (1), au moins une bande de curseur (4) s'étendant dans la direction d'une extension longitudinale du corps (12), au moins une bande de curseur (4) étant réalisée avec plusieurs pastilles de curseur (5) électriquement conductrices pour le couplage inductif d'au moins une bobine d'excitation (9) avec au moins une bobine de capteur (3) d'un stator (2) du capteur de déplacement linéaire (1), ainsi qu'avec des sections de non-couplage (6) électriquement moins ou pas conductrices par rapport aux pastilles de curseur (5), les pastilles de curseur (5) étant espacées les unes des autres dans le sens de l'extension longitudinale respectivement par les sections de non-couplage (6), et les pastilles de curseur (5) de la bande de curseur (4) étant formées sur le corps (12), les pastilles de curseur (5) étant constituées comme des protubérances (7) du corps (12) ou sur des protubérances (7) du corps (12), qui dépassent des sections de non-couplage (6), et dans lequel une section transversale des protubérances (7) a la forme d'un champignon, la forme de champignon étant en quelque sorte une forme de T, une tige de la forme de champignon s'éloignant du corps (12).

2. Corps (12) selon la revendication 1, dans lequel le corps (12) comprend au moins deux bandes de curseur (4), les pastilles de curseur (5) des deux bandes de curseur (4) étant décalées l'une par rapport à l'autre dans le sens de l'extension longitudinale des bandes de curseur (4).

3. Corps (12) selon la revendication 2, dans lequel au moins deux bandes de curseur (4) sont disposées sur des côtés opposés ou adjacents du corps (12).

4. Corps (12) selon la revendication 2 ou 3, dans lequel au moins deux bandes de curseur (4) présentent chacune un nombre différent de pastilles de curseur (5).

5. Corps (12) selon l'une des revendications précédentes, dans lequel les protubérances (7) sont aplaties sur une face supérieure (23) orientée vesr le côté opposé au corps (12).

6. Corps (12) selon l'une des revendications précédentes, dans lequel les sections de non-couplage (6) sont constituées par des rainures entre les pastilles de curseur (5).

7. Corps (12) selon l'une des revendications précédentes, dans lequel les pastilles de curseur (5) de la bande de curseur (4) sont reliées au corps (12) par liaison de matière.

8. Corps (12) selon l'une des revendications précédentes, dans lequel le corps et au moins une bande de curseur (4) sont constituées d'une seule pièce.

9. Corps (12) selon l'une des revendications 1 à 7, dans lequel le corps (12) est constitué d'un matériau support, en particulier d'une matière plastique, sur lequel les pastilles de curseur (5) sont appliquées sous forme de plaquettes conductrices et/ou de revêtements conducteurs.

10. Corps (12) selon l'une des revendications précédentes, dans lequel le corps (12) est réalisé sous la forme d'une tige d'actionneur de direction (12), d'une tige de piston ou d'un rail.

11. Agencement de système de véhicule (50) comprenant le corps allongé (12) selon l'une des revendications précédentes et un capteur de déplacement linéaire inductif (1), le capteur de déplacement linéaire comprenant un stator (2) avec au moins une bobine d'excitation (9) et au moins une bobine de capteur (3), ainsi qu'un circuit d'évaluation (8), le circuit d'évaluation (8) étant conçu pour détecter, en fonction du couplage inductif entre la bobine d'excitation (9) et la bobine de capteur (3), une position linéaire du corps (12) à l'aide d'au moins une bande de curseur (4) par rapport au stator (2).

12. Système de direction (10) avec un agencement de système de véhicule (50) selon la revendication 11, le système de direction (10) étant conçu comme un système steer-by-wire avec un appareil de commande (15) et un actionneur électromécanique (16), l'appareil de commande (15) étant couplé au capteur de déplacement linéaire (1) et étant conçu pour convertir la position du corps (12), réalisé sous forme de tige d'actionneur de direction (12), détectée par le capteur de déplacement linéaire (1), en une instruction de direction pour l'actionneur électromécanique (16) et la transmettre à l'actionneur électromécanique (16), afin que l'actionneur électromécanique (16) puisse exécuter un mouvement de direction correspondant à l'instruction de direction.

13. Véhicule doté d'une agencement de système de véhicule (50) selon la revendication 11 ou d'un système de direction (10) selon la revendication 12.
